# EUROPÄISCHE PATENTSCHRIFT

(11) **EP 1 619 054 B1**
(45) Veröffentlichungstag und Bekanntmachung des Hinweises auf die Patenterteilung: **19.12.2007**
(21) Anmeldenummer: 04103472.9
(22) Anmeldetag: 21.07.2004
(51) Int. Cl.: B60G 7/00, B60G 3/06

(54) **Einschaliger vorderer Querlenker**
Single-shell front lateral arm
Bras latéral avant monocoque

(43) Veröffentlichungstag der Anmeldung: 25.01.2006
(73) Patentinhaber: Ford Global Technologies, LLC, A subsidary of Ford Motor Company, Dearborn, MI 48126 (US)
(72) Erfinder: Hallfeldt, Torsten, 52249, Eschweiler (DE); Frantzen, Michael Johannes, 52076, Aachen (DE); David, Wolfgang, 52074, Aachen (DE); Simon, Marc, 50735, Köln (DE)
(74) Vertreter: Drömer, Hans-Carsten

(56) Entgegenhaltungen:
- WO-A-03/101767
- DE-A- 3 624 537
- DE-A- 10 024 225
- DE-A- 19 519 303
- DE-A- 19 843 825
- DE-U- 20 009 695

## Beschreibung

Die Erfindung betrifft einen L-förmigen Querlenker in Einschalenausbildung, der einen Anbindungsschenkel und einen Radschenkel aufweist, wobei der Anbindungsschenkel einen in Fahrtrichtung eines Kraftfahrzeuges gesehen vorderen Anbindungspunkt und einen dazu beabstandeten hinteren Anbindungspunkt aufweist, die mit einer Kraftfahrzeugkarosserie bzw. einem Hilfsrahmen verbindbar sind, wobei der Anbindungsschenkel im Wesentlichen längs der Fahrtrichtung orientiert ist, und wobei sich der Radschenkel von dem vorderen Anbindungspunkt zu einem freien Ende erstreckt, an dem ein Rad anbindbar ist, und wobei der Radschenkel im Wesentlichen quer zu der Fahrtrichtung orientiert ist.

Derartige Querlenker sind z.B. aus der gattungsgemäßen WO 03/101767 A bekannt.

Die EP 1 293 364 A2 offenbart einen Querlenker in Doppelschalen-Blechausbildung für die Vorderradanbindung bei einem Kraftfahrzeug mit zwei etwa in Fahrtrichtung hintereinander liegenden Anlenkpunkten an das Chassis. Die Anlenkpunkte bilden eine horizontale Kippachse für den Querlenker, wobei der Querlenker einen Anbindungspunkt für die Radaufhängung aufweist. Wenigstens einer der Anlenkpunkte ist als ein in ein Lager eingreifender Sechskant mit Sechskanthälften, die Teil der Schalen des Querlenkers sind, ausgebildet.

Die EP 1 223 058 A2 offenbart eine Aufhängung, die aus einer gestanzten Metallplatte hergestellt ist. Die Aufhängung umfaßt einen ersten horizontalen Abschnitt, der sich im Wesentlichen horizontal erstreckt, wenn dieser mit einer Fahrzeugkarosserie verbunden ist. Die Aufhängung umfaßt einen senkrechten Abschnitt, der durch ein Herunterbiegen einer senkrechten Ecke des ersten horizontalen Abschnitts gebildet ist. Die Aufhängung umfaßt weiter einen Gegenflansch, der durch eine Einwärtsbiegung einer unteren Ecke des senkrechten Abschnittes gebildet ist und einen zweiten horizontalen Abschnitt, der aufwärts von dem ersten horizontalen Abschnitt orientiert ist.

Die US 5,992,867 offenbart eine Aufhängung. Die Aufhängung umfaßt einen Lenkerkörper mit einem ersten und einem zweiten Ende und einem Abschnitt, der die beiden Enden miteinander verbindet. Ein Bereich des Abschnitts ist mit einem offenen Querschnitt ausgestaltet, welcher in eine Richtung offen ist. Der offene Querschnitt weist eine erste Wand mit einem flachen Abschnitt auf, der an Endbereichen endet. Der offene Querschnitt weist Seitenwände auf, die sich in einer Richtung von den jeweiligen Endabschnitten der ersten Wand erstrecken und die an Endbereichen enden, wobei zweite Wände sich von jeweiligen Endbereichen jeder Seitenwand einwärts erstrecken. Die zweiten Wände erstrecken sich zueinander. Die Aufhängung weist ferner einen Verbindungspunkt für ein Rad am ersten Ende des Lenkerkörpers, und einen Verbindungspunkt zum Fahrzeug am zweiten Ende des Lenkerkörpers, sowie einen Verbindungspunkt zum Fahrzeug auf, der mit dem Abschnitt des Lenkerkörpers verbunden ist. Die Verbindungspunkte definieren eine Lasteinwirkungsebene, durch die eine Last auf die Aufhängung einwirkt. Die Lasteinwirkungsebene geht durch die erste Wand des Lenkerkörpers oder existiert in einer zur Richtung von der ersten Wand des Lenkerkörpers entgegengesetzten Richtung.

Die DE 199 40 364 A1 betrifft ein Achssystem für gelenkige Anordnung von Fahrzeugachsen in Kraftfahrzeugen. Das Achssystem besteht aus einem Achsstrebenkörper und wenigstens einem Gelenkkörper, wobei der Achsstrebenkörper in den Endbereichen ausgebildete Ausnehmungen zur Aufnahme der Gelenkkörper aufweist. Der Achsstrebenkörper und die Gelenkkörper bestehen jeweils aus einem einteiligen, geschlossenen Hohlprofil.

Die EP 1 346 855 A2 offenbart einen Querlenker als Fahrwerkskomponente der Radaufhängung eines Kraftfahrzeuges, welcher einen L-förmig konfigurierten Schalenkörper aus Metallblech mit zwei Längsabschnitten und einen zwischen den Längsabschnitten befindlichen Bogenabschnitt umfaßt. Der Schalenkörper weist einen Boden mit randseitigen Schenkeln auf. An die Schenkel schließen sich nach innen zur Mittellängsebene des Schalenkörpers gerichtete Stege einstückig an. Die EP 1 346 855 A2 betrifft aber auch ein Verfahren zur Herstellung des Schalenkörpers für einen Querlenker, bei dem zunächst eine Metallplatine zu einem schalenförmigen Vorformling mit einem Boden und randseitigen Schenkeln umgeformt wird. Unter bereichsweiser innerer Abstützung des Bodens wird der Vorformling durch einen Innenstempel über einen Außenstempel in einer Hohlform unter einwärts gerichteter Umstellung der freien Enden der Schenkel zum Schalenkörper endgeformt.

Die EP 0 733 499 B1 bezieht sich auf einen Schwingarm, der durch Preßformen oder durch Bördeln eines plattenförmigen Elementes ausgebildet ist, wobei in einem Fall, in dem, während ein Fahrzeug fährt, eine Last auf den Schwingarm in eine Richtung aufgebracht wird, die eine Richtung schneidet, in der der Schwingarm schwingt, zumindest ein Bereich, in dem eine maximale Spannung erzeugt wird, ein Nicht-Endabschnitt des plattenförmigen Elementes ist. Der Schwingarm weist einen Hauptabschnitt, der im Wesentlichen horizontal angeordnet ist, und Seitenabschnitte auf, die von Querrichtung-Endabschnitten des Hauptabschnitts nach unten gebogen sind. Die Endabschnitte des plattenförmigen Elementes sind von den unteren Endabschnitten der Seitenabschnitte zu einer Innenseite des Querschnitts hin gebogen.

Der Ausgestaltung von vorderen, unteren L- oder A-förmigen Querlenkern liegen hauptsächlich Steifigkeitserfordernisse und eine Widerstandsfähigkeit gegen hohe Längskräfte während des Bremsens (Ausknicken) zugrunde. Heutzutage werden die vorderen Querlenker aus gegossenem oder geschmiedetem Aluminium (kostenintensiv), Gußeisen (schwer) oder gestanzten Metallblechen in einer Einschalenausgestaltung oder in einer Zweischalenausgestaltung hergestellt. Um eine höhere Steifigkeit und eine höhere Widerstandsfähigkeit zu erreichen, werden bei der Zweischalenausbildung zwei gestanzte Bleche derart miteinander verschweißt, daß diese einen hohlen Querschnitt aufweisen. Für Kleinkraftwagen sind auch einschalige Lösungen bekannt, wobei die Baugruppe insbesondere bei L-förmigen Querlenkern straff ausgeführt wird. Um die Widerstandsfähigkeit gegen ein Ausknicken aufrecht zu erhalten, wird dabei entweder die Materialdicke des verwendeten Metallblechs erhöht oder es werden zusätzliche Verstärkungselemente vorgesehen, was aber bei beiden Lösungen zu ei nem höheren Gewicht führt. Durch das höhere Gewicht des Querlenkers erhöht sich selbstverständlich auch die Gesamtmasse des Kraftfahrzeuges, wodurch der Kraftstoffverbrauch und damit Schadstoffemissionen steigen. Zudem steigen die Herstellungskosten durch zusätzlichen Materialeinsatz oder durch die umständliche Montage der Verstärkungselemente.

Der Erfindung liegt die Aufgabe zugrunde, einen Querlenker der eingangs genannten Art mit einfachen Mitteln dahin gehend zu verbessern, daß dieser bei erhöhter Steifigkeit und Widerstandsfähigkeit ein geringes Gewicht aufweist, wobei dieser gleichzeitig kostengünstiger herstellbar sein soll.

Erfindungsgemäß wird die Aufgabe dadurch gelöst, daß zumindest der Anbindungsschenkel im Querschnitt gesehen zu einem geschlossenen Hohlprofil geformt ist, das eine Flanschseite, eine dazu gegenüberliegende Querseitenwand und zwei Längsseitenwände aufweist, wobei das Hohlprofil auf seiner Flanschseite verschlossen ist, wobei die Flanschseite zumindest einen Flansch aufweist, der sich im Querschnitt gesehen bezogen auf eine Mittelachse des Hohlprofils parallel zu dieser erstreckt, so daß ein Befestigungselement zur Anbindung an die Karosserie bzw. den Hilfsrahmen lagesicher in dem Hohlprofil integrierbar ist, wobei der Querlenker einstückig aus einem einzelnen Metallblech hergestellt ist.

Damit wird ein Querlenker zur Verfügung gestellt, der zumindest durch die Ausbildung des Anbindungsschenkels zu einem im Querschnitt gesehen geschlossenen Hohlprofil eine erhöhte Steifigkeit bei reduziertem Gewicht und reduzierten Herstellungskosten aufweist.

Günstig im Sinne der Erfindung ist, wenn die Flanschseite stoffschlüssig verschlossen ist. Hierzu kann beispielsweise eine Schweißverbindung gewählt werden. Denkbar ist allerdings auch, daß eine Klebverbindung oder andere Verbindungsmethoden gewählt werden.

Um die Steifigkeit des Hohlprofils weiter zu erhöhen, ist zweckmäßigerweise vorgesehen, daß das Hohlprofil im Querschnitt gesehen unterschiedliche Ausgestaltungen aufweist. In einem bevorzugten Ausführungsbeispiel ist das Hohlprofil im Querschnitt gesehen rechteckig ausgestaltet, wobei die Flanschseite zwei zueinander orientierte Flansche aufweist, die an ihren Stößen miteinander stoffschlüssig verbunden sind, wobei das Befestigungselement lagesicher zwischen der Flanschseite und der Querseitenwand angeordnet ist. Denkbar ist aber auch, daß das Hohlprofil im Querschnitt gesehen rechteckig ausgestaltet ist, wobei die Flanschseite einen in Richtung zu einer der Längsseitenwände orientierten Flansch aufweist, der mit dieser stoffschlüssig verbunden ist, wobei die Flanschseite und die Querseitenwände jeweils eine Aufwölbung zur Aufnahme des Befestigungselementes aufweisen. Die jeweilige Aufwölbung ist bezogen auf die Mittelachse des Hohlprofils sinnvoll konvex gewölbt, wobei die jeweilige konvexe Aufwölbung an das Befestigungselement angepaßt ist. Konvex im Sinne der Erfindung ist eine Aufwölbung, die von der Mittelachse weggerichtet ist, so daß im Bereich der jeweiligen Aufwölbung ein quasi erweiterter Querschnitt gebildet ist.

Vorteilhafterweise kann das Hohlprofil im Querschnitt gesehen quadratisch ausgestaltet sein, wobei eine der Längsseitenwände einen von dieser abstehenden Kragen aufweist, der von einem Flansch der Flanschseite überlappt wird, wobei der Kragen stoffschlüssig mit dem Flansch verbunden ist, und wobei das Befestigungselement sowohl an den Längsseitenwänden als auch der Flanschseite und der Querseitenwand zumindest lagesicher anliegt.

Günstig im Sinne der Erfindung ist, wenn das Hohlprofil im Querschnitt gesehen mit seiner Querseitenwand und seinen Längsseitenwänden S-förmig ausgestaltet ist, wobei die Flanschseite einen Flansch aufweist, der mit seiner Stirnseite mit einem zur Flanschseite gerichteten S-Bogen stoffschlüssig verbunden ist, wobei mit einem von der Flanschseite weg gerichteten S-Bogen ein Aufnahmebereich zur Aufnahme des Befestigungselementes gebildet ist. Das Hohlprofil kann aber auch im Querschnitt gesehen mit seiner Querseitenwand und seinen Längsseitenwänden Z-förmig ausgestaltet sein, wobei die Flanschseite einen Flansch aufweist, der mit seiner Stirnseite mit einer zur Flanschseite orientierten, verrundeten Z-Spitze stoffschlüssig verbunden ist, wobei mit einer von der Flanschseite weg gerichteten, verrundeten Z-Spitze ein Aufnahmebereich zur Aufnahme des Befestigungselementes gebildet ist.

Zweckmäßig im Sinne der Erfindung ist, wenn das Hohlprofil im Querschnitt gesehen mit seiner Querseitenwand und seinen Längsseitenwänden W-förmig ausgestaltet ist, wobei die Flanschseite zwei zueinander orientierte Flansche aufweist, die an ihren Stößen miteinander und mit einem in Richtung zur Flanschseite orientierten W-Bogen stoffschlüssig verbunden ist, wobei das Befestigungselement in einem Aufnahmebereich aufgenommen ist.

In einer bevorzugten Ausgestaltung ist der Querlenker aus Stahl oder Aluminium gebildet.

Der Querlenker bzw. das Hohlprofil wird bevorzugt aus einem einzigen Metallblechrohling geformt, in dem Tiefziehverfahren in einer Form und/oder Biegeverfahren über eine Stanze angewendet werden. Hierbei können zunächst die Querseitenwände und die Längsseitenwände geformt werden. Das Profil der Querseitenwände und der Längsseitenwände ist im Querschnitt gesehen vorteilhaft unterschiedlich ausgestaltet, damit die Steifigkeit des Querlenkers erhöht wird, und um ein Befestigungselement, welches bevorzugt als Bolzen ausgestaltet sein kann, in einfacher Weise in den Querlenker einzubringen. In einem zweiten Schritt wird die Flanschseite gebogen und der bzw. die Flansche entweder mit den sich zueinander orientierten Flanschstößen bzw. einer der Längsseitenwände oder der Querseitenwand, je nach dem welche Querschnittsausgestaltung gewählt wurde, verbunden. Es ist jedoch auch denkbar, zunächst die Flanschseite zu formen, um in einem anschließenden Preß- bzw. Biegeprozeß die Seitenwände zu formen.

Selbstverständlich weist der Querlenker Vorrichtungen zur Aufnahme einer Anbindungsvorrichtung eines Rades, sowie der Befestigungselemente an den jeweiligen vorderen bzw. hinteren Anbindungspunkten auf. Diese werden bevorzugt mit dem Querlenker stoffschlüssig verbunden, vorzugsweise verschweißt. Insbesondere das Befestigungselement an dem hinteren Anbindungspunkt kann entweder vor oder nach dem Biegen und dem Schweißen der Flansche in das Hohlprofil eingebracht werden, weswegen das Befestigungselement des hinteren Anbindungspunktes bevorzugt als Bolzen ausgeführt ist. Das Befestigungselement bzw. der Bolzen ist zur lagesicheren Aufnahme in dem Hohlprofil kraftschlüssig mit diesem verbindbar, indem das Hohlprofil das Befestigungselement bzw. den Bolzen mit seinem Innenumfang zumindest bereichsweise umfaßt. Das Befestigungselement bzw. der Bolzen kann aber auch stoffschlüssig mit dem Hohlprofil verbunden sein, indem das in dem Hohlprofil eingebrachte bzw. eingesteckte Befestigungselement mittels bereichsweisen Schweißen, Kleben oder anderen Verbindungsmethoden verbunden wird. Das Befestigungselement des vorderen Anbindungspunktes ist vorzugsweise als Gummilager ausgestaltet. Zur Anbindung des Rades an das freie Ende des Radschenkels kann ein Kugelgelenk vorgesehen sein.

Weitere vorteilhafte Ausgestaltungen der Erfindung sind in den Unteransprüchen und der folgenden Figurenbeschreibung offenbart. Es zeigen:
- Fig. 1: Einen Querlenker in einer perspektivischen Gesamtansicht auf eine Unterseite,
- Fig. 2: einen Querschnitt entlang der Linie A aus Figur 1,
- Fig. 3 bis Fig. 8: unterschiedliche Querschnittsausgestaltungen des Querlenkers aus Figur 1.

In den unterschiedlichen Figuren sind gleiche Teile stets mit denselben Bezugszeichen versehen, weswegen diese in der Regel auch nur einmal beschrieben werden.

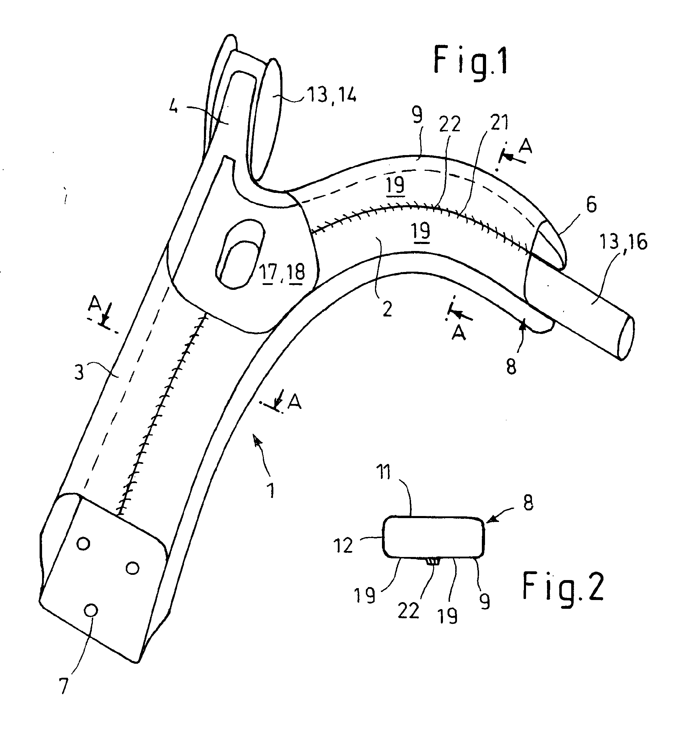

Figur 1 zeigt einen vorderen, unteren Querlenker 1 in Einschalenausbildung. Der Querlenker 1 weist einen Anbindungsschenkel 2 und einen Radschenkel 3 auf. In dem dargestellten Ausführungsbeispiel ist der Querlenker 1 L-förmig ausgeführt.

Der Anbindungsschenkel 2 weist einen in Fahrtrichtung eines Kraftfahrzeugs gesehen vorderen Anbindungspunkt 4 und einen dazu beabstandeten hinteren Anbindungspunkt 6 auf. Mit dem Anbindungsschenkel 2 ist der Querlenker 1 über die Anbindungspunkte 4 bzw. 6 mit einer Kraftfahrzeugkarosserie bzw. einem Hilfsrahmen verbindbar. Der Anbindungsschenkel 2 ist im eingebauten Zustand im Wesentlichen längs der Fahrtrichtung orientiert, wobei sich der Radschenkel 3 von dem vorderen Anbindungspunkt 4 zu einem freien Ende 7 erstreckt, an dem ein Rad anbindbar ist. Der Radschenkel 3 ist im Wesentlichen quer zur Fahrtrichtung orientiert.

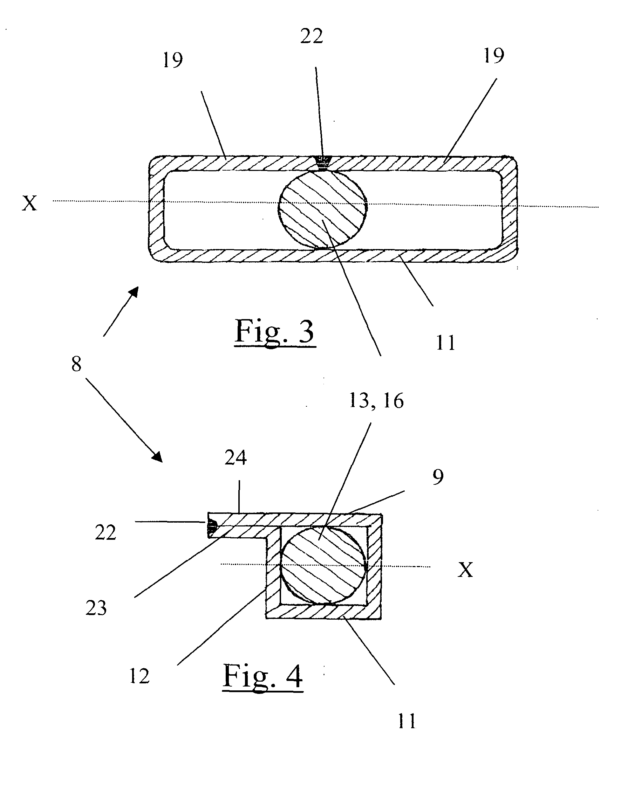

In dem dargestellten Ausführungsbeispiel gemäß Figuren 1 und 2 ist zumindest der Anbindungsschenkel 2 im Querschnitt gesehen zu einem geschlossenen Hohlprofil 8 geformt. Das geschlossene Hohlprofil 8 weist eine Flanschseite 9, eine dazu gegenüberliegende Querseitenwand 11 und zwei Längsseitenwände 12 auf. Auf seiner Flanschseite 9 ist das Hohlprofil 8 verschlossen, so daß der Querlenker 1 mittels des Hohlprofils 8 eine erhöhte Steifigkeit aufweist und so daß ein Befestigungselement 13 zur Anbindung an die Karosserie bzw. den Hilfsrahmen lagesicher in dem Hohlprofil 8 integrierbar ist. Der Querlenker 1 ist einstückig aus einem einzelnen Metallblech hergestellt.

In dem in Figur 1 dargestellten Ausführungsbeispiel ist die Flanschseite 9 als untere Seite ausgebildet, was bedeutet, daß der Querlenker 1 im eingebauten Zustand mit seiner Flanschseite 9 zu einem Boden weist. Dementsprechend ist die zur Flanschseite 9 gegenüberliegende Querseitenwand 11 als Oberseite ausgestaltet, die im eingebauten Zustand des Querlenkers 1 zu einem Fahrzeugboden weist. Selbstverständlich können die Flanschseite 9 und die Querseitenwand 11 aber auch vertauscht sein, so daß die Flanschseite 9 zu einem Fahrzeugboden weist, wobei die Querseitenwand 11 dann zu einem Boden weisen würde.

Dem vorderen bzw. hinteren Anbindungspunkt 4 bzw. 6 sind jeweils Befestigungselemente 13 bzw. 14, 16 zugeordnet, um den Querlenker 1, insbesondere den Anbindungsschenkel 2 mit der Fahrzeugkarosserie bzw. dem Hilfsrahmen zu verbinden. In dem dargestellten Ausführungsbeispiel ist dem vorderen Anbindungspunkt 4 ein Gummilager 14 und dem hinteren Anbindungspunkt 6 ein Bolzen 16 zugeordnet. Der Bolzen 16 ist in das Hohlprofil 8 hinreichend lagesicher integriert, wobei die Lagesicherung weiter unten näher beschrieben wird.

Dem freien Ende 7 des Radschenkels 3 kann eine Radanbindungsvorrichtung zugeordnet werden, die bevorzugt als Kugelgelenk ausgeführt sein kann.

In dem dargestellten Ausführungsbeispiel nach Figur 1 ist auch der Radschenkel 3 im Querschnitt gesehen als geschlossenes Hohlprofil 8 ausgestaltet. Im Folgenden wird aber jeweils nur das Hohlprofil 8 des Anbindungsschenkels 2 beschrieben, wobei der Radschenkel 3 im Querschnitt gesehen identisch ausgestaltet sein kann.

Denkbar ist allerdings auch, daß der Radschenkel 3 nicht unbedingt als geschlossenes Hohlprofil 8 ausgestaltet ist.

In dem in Figur 1 dargestellten Ausführungsbeispiel weist ein Übergangsbereich 17 zwischen dem Anbindungsschenkel 2 und dem Radschenkel 3 flanschseitig eine herstellungsbedingte Ausnehmung 18 auf.

Wie die Figuren 2 und 3 zeigen, ist das Hohlprofil 8 des Anbindungsschenkels 2 im Querschnitt gesehen rechteckig ausgestaltet. Die Flanschseite 9 weist zwei zueinander orientierte Flansche 19 auf, die an ihren Stößen 21 miteinander stoffschlüssig verbunden sind. Zur stoffschlüssigen Verbindung wird bevorzugt eine Schweißverbindung bzw. Schweißnaht 22 gewählt. Das Befestigungselement 13 bzw. der Bolzen 16 ist lagesicher zwischen der Flanschseite 9 und der Querseitenwand 11 angeordnet, wobei bei der Verschweißung der beiden Flansche 19 gleichzeitig das Befestigungselement 13 bzw. der Bolzen 16 mit verschweißt wurde.

In einem in Figur 4 dargestellten Ausführungsbeispiel ist das Hohlprofil 8, im Querschnitt gesehen, quadratisch ausgestaltet, wobei eine der Längsseitenwände 12 einen von diesen abstehenden Kragen 23 aufweist, der von einem Flansch 24 der Flanschseite 9 überlappt wird. Der Kragen 23 ist stoffschlüssig mit dem Flansch 24 verbunden, vorzugsweise verschweißt. Das Befestigungselement 13 bzw. der Bolzen 16 liegt sowohl an den Längsseitenwänden 12 als auch der Flanschseite 9 und der Querseitenwand 11 hinreichend lagesicher an. Hierbei ist das Befestigungselement 13 bzw. der Bolzen 16 kraftschlüssig von dem Innenumfang des Hohlprofils 8 umfaßt, wobei zusätzlich eine Schweißverbindung, beispielsweise eine Punktschweißung mit einer der Wände 9, 11 bzw. 12 möglich ist.

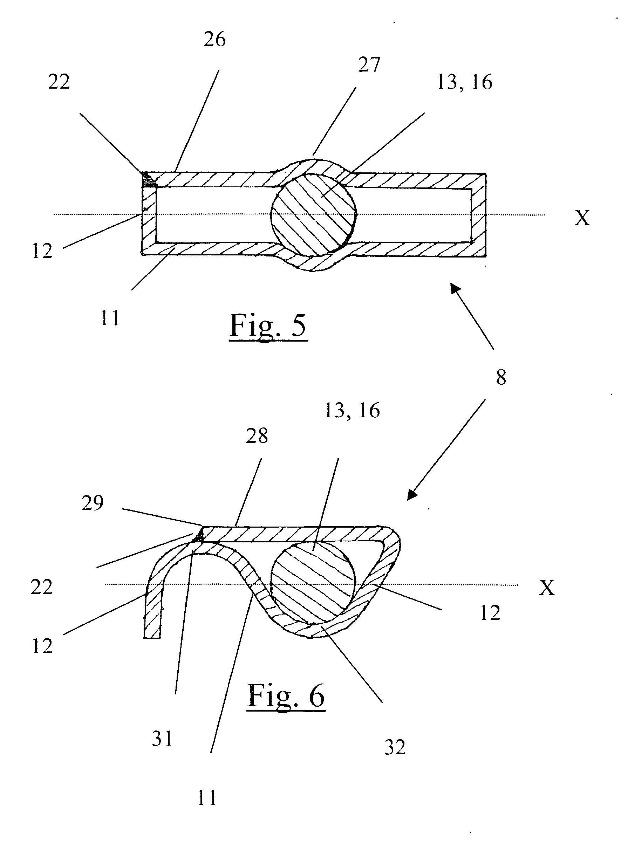

In einem Ausführungsbeispiel nach Figur 5 ist das Hohlprofil 8 im Querschnitt gesehen rechteckig ausgestaltet, wobei die Flanschseite 9 einen in Richtung zu einer der Längsseitenwände 12 orientierten Flansch 26 aufweist, der mit dieser stoffschlüssig verbunden, vorzugsweise verschweißt ist. Die Flanschseite 9 und die Querseitenwand 11 weisen jeweils eine Aufwölbung 27 zur Aufnahme des Befestigungselementes 13 bzw. des Bolzens 16 auf. Die Aufwölbung 27 ist bezogen auf eine Mittelachse X des Hohlprofils 8 sinnvoll konvex ausgestaltet wobei die jeweilige konvexe Aufwölbung 27 an das Befestigungselement 13 bzw. den Bolzen 16 angepaßt ist.

In einem weiteren Ausführungsbeispiel nach Figur 6 ist das Hohlprofil 8 im Querschnitt gesehen mit seiner Querseitenwand 11 und seinen Längsseitenwänden 12 S-förmig ausgestaltet. Die Flanschseite 9 weist einen Flansch 28 auf, der mit seiner Stirnseite 29 mit einem zur Flanschseite 9 gerichteten S-Bogen 31 stoffschlüssig verbunden, vorzugsweise verschweißt ist. Mit dem von der Flanschseite 9 weg gerichteten Bogen 32 wird ein Aufnahmebereich zur Aufnahme des Befestigungselementes 13 bzw. des Bolzens 16 gebildet.

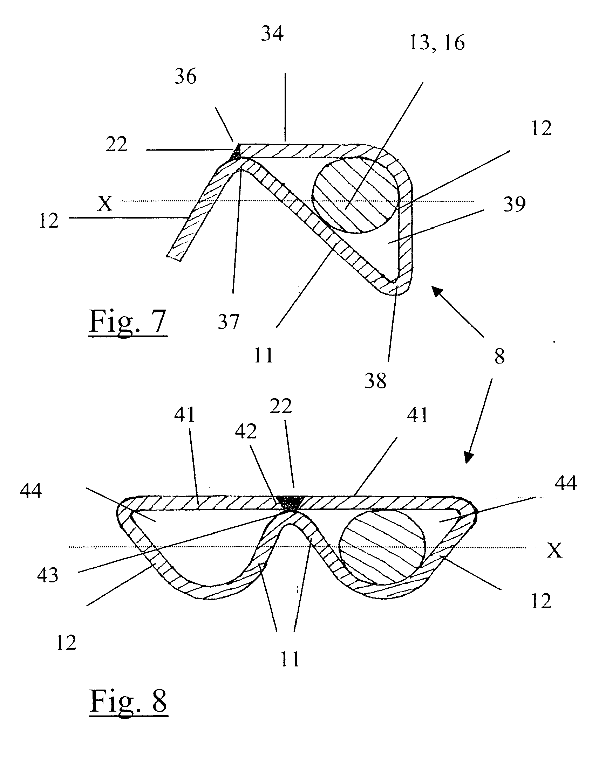

Denkbar ist aber auch, daß das Hohlprofil 8 gemäß Figur 7 im Querschnitt gesehen mit seiner Querseitenwand 11 und seinen Längsseitenwänden 12 Z-förmig ausgestaltet ist, wobei die Flanschseite 9 einen Flansch 34 aufweist, der mit seiner Stirnseite 36 mit einer zur Flanschseite 9 orientierten, verrundeten Z-Spitze 37 stoffschlüssig verbunden, vorzugsweise verschweißt ist. Eine von der Flanschseite 9 weg gerichtete, verrundete Z-Spitze 38 bildet einen Aufnahmebereich 39 zur Aufnahme des Befestigungselementes 13 bzw. des Bolzens 16.

In einem weiteren Ausführungsbeispiel gemäß Figur 8 ist das Hohlprofil 8 im Querschnitt gesehen mit seiner Querseitenwand 11 und seinen Längsseitenwänden 12 W-förmig ausgestaltet, wobei die Flanschseite 9 zwei zueinander orientierte Flansche 41 aufweist, die an ihren Stößen 42 miteinander und mit einem in Richtung zur Flanschseite 9 orientierten W-Bogen 43 stoffschlüssig verbunden, vorzugsweise verschweißt sind. Das Befestigungselement 13 bzw. der Bolzen 16 ist in einem der gebildeten Aufnahmebereiche 44 aufgenommen.

Denkbar ist, wenn die Querseitenwand 11 und die Längsseitenwände 12 im Querschnitt gesehen W-förmig ausgestaltet sind, daß die Flanschseite 9 lediglich einen Flansch 41 aufweist, der beide Aufnahmebereiche 44 übergreift und mit einer der Längsseitenwände 12 stoffschlüssig verbunden, vorzugsweise verschweißt ist. Bei einer derartigen Ausgestaltung könnte ein zusätzlicher Schweißpunkt im Berührungsbereich des W-Bogens 43 mit der Flanschseite 9 vorgesehen sein.

In allen genannten Ausführungsbeispielen besteht der Querlenker 1 bzw. das Hohlprofil 8 aus Stahl, kann aber auch aus Aluminium gebildet sein.

Vorteilhafterweise wird mit den erfindungsgemäßen Ausgestaltungen bezogen auf eine zweischalige Ausgestaltung des Querlenkers 1 lediglich ein einziges Metallblech verwendet, um das Hohlprofil 8 bzw. den gesamten Querlenker 1 zu bilden, wobei das Hohlprofil 8, bezogen auf die Materialstärke, relativ klein ist, wobei aber Steifigkeitserfordernisse erfüllt werden. Zudem ist die Schweißnaht 22 bzw. andere Verbindungsverfahren, bezogen auf eine gesamte Länge des Querlenkers 1, relativ klein. Bezogen auf eine einschalige Ausführung weist die erfindungsgemäße Lösung relativ große Flansche 19, 24, 26, 28, 34, 41 an der Flanschseite 9 auf, die miteinander und/oder mit der Querseitenwand 11 bzw. den zugeordneten Längsseitenwänden 12 verbunden sind, um das Hohlprofil 8 zu bilden, wodurch die Steifigkeit und die Widerstandsfähigkeit des Querlenkers 1 erhöht wird. Auch durch die unterschiedliche Ausgestaltung der Querseitenwand 11 bzw. der Längsseitenwände 12 im Querschnitt gesehen nach den Ausführungsbeispielen der Figuren 4 bis 8 bzw. der Figuren 1 bis 3 wird die Steifigkeit des Querlenkers erheblich erhöht. Zudem ist das Hohlprofil 8 derart ausgestaltet, daß das Befestigungselement 13 bzw. der Bolzen 16 in das Hohlprofil 8 integriert werden kann und dort einfach mit stabilisierten Längsseitenwänden 12 um ihn herum verbunden werden kann.

In allen Ausführungsbeispielen weist die Flanschseite 9 zumindest einen Flansch 19, 24, 26, 28, 34, 41 auf, der sich im Querschnitt gesehen bezogen auf eine Mittelachse X des Hohlprofils 8 parallel zu dieser erstreckt und eben ausgeführt ist.

Zur Herstellung des Querlenkers 1 wird ein Metallblechrohling mittels Tiefziehprozessen und/oder Biegeprozessen geformt. In einem ersten Schritt werden die Querseitenwand 11 und die Längsseitenwände 12 geformt. Im Querschnitt gesehen kann das Profil der Querseitenwand 11 und der Längsseitenwand 12 in unterschiedlichen Arten ausgeführt werden, um die Steifigkeit und die Widerstandsfähigkeit zu erhöhen und um beispielsweise den Bolzen 16 zu integrieren. In einem zweiten Schritt wird die Flanschseite 9 gebogen und stoffschlüssig verbunden, vorzugsweise verschweißt. Je nach Ausführung ist auch denkbar zunächst die Flanschseite 9 zu formen, um anschließend die Quer- bzw. Längsseitenwände 11 bzw. 12 zu formen. Als Schweißprozeß kann z. B. Laserschweißen oder Punktschweißen verwendet werden. Denkbar ist aber auch eine Klebverbindung oder andere Verbindungsmethoden. Das Kugelgelenk, das Gummilager und der Bolzen werden eingeschweißt. Dies kann entweder vor oder nach dem Biegen und Schweißen der Flanschseite 9 geschehen.

## Patentansprüche

1. Querlenker in Einschalenausbildung, der einen Anbindungsschenkel (2) und einen Radschenkel (3) aufweist, wobei der Anbindungsschenkel (2) einen in Fahrtrichtung eines Kraftfahrzeugs gesehen vorderen Anbindungspunkt (4) und einen dazu beabstandeten, hinteren Anbindungspunkt (6) aufweist, die mit einer Kraftfahrzeugkarosserie bzw. einem Hilfsrahmen verbindbar sind, wobei der Anbindungsschenkel (2) im Wesentlichen längs der Fahrtrichtung orientiert ist, und wobei sich der Radschenkel (3) von dem vorderen Anbindungspunkt (4) zu einem freien Ende (7) erstreckt, an dem ein Rad anbindbar ist, und wobei der Radschenkel (3) im Wesentlichen quer zur Fahrtrichtung orientiert ist, wobei
zumindest der Anbindungsschenkel (2) im Querschnitt gesehen zu einem geschlossenen Hohlprofil (8) geformt ist, **dadurch gekennzeichnet, daß**, das Hohlprofil (8) eine Flanschseite (9), eine dazu gegenüberliegende Querseitenwand (11) und zwei Längsseitenwände (12) aufweist, wobei das Hohlprofil (8) auf seiner Flanschseite (9) verschlossen ist und wobei die Flanschseite (9) zumindest einen Flansch (19, 24, 26, 28, 34, 41) aufweist, der sich im Querschnitt gesehen bezogen auf eine Mittelachse (X) des Hohlprofils (8) parallel zu dieser erstreckt, so daß ein Befestigungselement (13, 16) zur Anbindung an die Karosserie bzw. den Hilfsrahmen lagesicher in das Hohlprofil (8) integrierbar ist, wobei der Querlenker (1) einstückig aus einem einzelnen Metallblech hergestellt ist.

2. Querlenker nach Anspruch 1,
**dadurch gekennzeichnet, daß**
das Hohlprofil (8) auf seiner Flanschseite (9) stoffschlüssig verschlossen ist.

3. Querlenker nach Anspruch 1 oder 2,
**dadurch gekennzeichnet, daß**
das Hohlprofil (8) im Querschnitt gesehen rechteckig ausgestaltet ist, wobei die Flanschseite (9) zwei zueinander orientierte Flansche (19) aufweist, die an ihren Stößen (21) miteinander stoffschlüssig verbunden sind, wobei das Befestigungselement (13, 16) lagesicher zwischen der Flanschseite (9) und der Querseitenwand (11) angeordnet ist.

4. Querlenker nach Anspruch 1 oder 2,
**dadurch gekennzeichnet, daß**
das Hohlprofil (8) im Querschnitt gesehen rechteckig ausgestaltet ist, wobei die Flanschseite (9) einen in Richtung zu einer der Längsseitenwände (12) orientierten Flansch (26) aufweist, der mit dieser stoffschlüssig verbunden ist, wobei die Flanschseite (9) und die Querseitenwand (11) jeweils eine Aufwölbung (27) zur Aufnahme des Befestigungselementes (13, 16) aufweist.

5. Querlenker nach Anspruch 1 oder 2,
**dadurch gekennzeichnet, daß**
das Hohlprofil (8) im Querschnitt gesehen quadratisch ausgestaltet ist, wobei eine der Längsseitenwände (12) einen von dieser abstehenden Kragen (23) aufweist, der von einem Flansch (24) überlappt wird, wobei der Kragen (23) stoffschlüssig mit dem Flansch (24) verbunden ist, und wobei das Befestigungselement (13, 16) sowohl an den Längsseitenwänden (12) als auch der Flanschseite (9) und der Querseitenwand (11) anliegt.

6. Querlenker nach Anspruch 1 oder 2,
**dadurch gekennzeichnet, daß**
das Hohlprofil (8) im Querschnitt gesehen mit seiner Querseitenwand (11) und seinen Längsseitenwänden (12) S-förmig ausgestaltet ist, wobei die Flanschseite (9) einen Flansch (28) aufweist, der mit seiner Stirnseite (29) mit einer zur Flanschseite (9) gerichteten S-Bogen (31) stoffschlüssig verbunden ist, wobei mit dem von der Flanschseite (9) weg gerichteten S-Bogen (32) ein Aufnahmebereich (33) zur Aufnahme des Befestigungselementes (13, 16) gebildet ist.

7. Querlenker nach Anspruch 1 oder 2,
**dadurch gekennzeichnet, daß**
das Hohlprofil (8) im Querschnitt gesehen mit seiner Querseitenwand (11) und seinen Längsseitenwänden (12) Z-förmig ausgestaltet ist, wobei die Flanschseite (9) einen Flansch (34) aufweist, der mit seiner Stirnseite (36) mit einer zur Flanschseite (9) orientierter, verrundeten Z-Spitze (37) stoffschlüssig verbunden ist, wobei eine von der Flanschseite (9) weg gerichtete Z-Spitze (38) einen Aufnahmebereich (39) zur Aufnahme der Befestigungselementes (13, 16) bildet.

8. Querlenker nach Anspruch 1 oder 2,
**dadurch gekennzeichnet, daß**
das Hohlprofil (8) im Querschnitt gesehen mit seiner Querseitenwand (11) und seinen Längsseitenwänden (12) W-förmig ausgestaltet ist, wobei die Flanschseite (9) zwei zueinander orientierte Flansche (41) aufweist, die an ihren Stößen (42) miteinander und mit einem in Richtung zur Flanschseite (9) orientierten W-Bogen (43) stoffschlüssig verbunden sind, wobei das Befestigungselement (13, 16) in einem Aufnahmebereich (44) aufgenommen ist.

9. Querlenker nach einem der vorhergehenden Ansprüche,
**dadurch gekennzeichnet, daß**
das Hohlprofil (8) bzw. der Querlenker (1) aus Stahl oder Aluminium gebildet ist.

## Claims

1. Transverse link of single-shell configuration which has a connecting limb (2) and a wheel limb (3), the connecting limb (2) having, as viewed in the driving direction of a motor vehicle, a front connecting point (4) and a rear connecting point (6) which is spaced apart from the former, which connecting points (4, 6) can be connected to a motor-vehicle body or an auxiliary frame, the connecting limb (2) being oriented substantially along the driving direction, and the wheel limb (3) extending from the front connecting point (4) to a free end (7), to which a wheel can be connected, and the wheel limb (3) being oriented substantially transversely with respect to the driving direction, at least the connecting limb (2) being shaped to form a closed hollow profile (8) as viewed in cross section, **characterized in that** the hollow profile (8) has a flange side (9), a transverse side wall (11) which lies opposite the former, and two longitudinal side walls (12), the hollow profile (8) being closed on its flange side (9) and the flange side (9) having at least one flange (19, 24, 26, 28, 34, 41) which, as viewed in cross section and in relation to a centre axis (X) of the hollow profile (8), extends parallel to the said centre axis (X), with the result that a fastening element (13, 16) for attachment to the vehicle body or the auxiliary frame can be integrated into the hollow profile (8) in a positionally secure manner, the transverse link (1) being manufactured in one piece from a single metal sheet.

2. Transverse link according to Claim 1, **characterized in that** the hollow profile (8) is closed on its flange side (9) with a material-to-material fit.

3. Transverse link according to Claim 1 or 2, **characterized in that**, as viewed in cross section, the hollow profile (8) is of rectangular configuration, the flange side (9) having two flanges (19) which are oriented towards one another and are connected to one another at their abutments (21) with a material-to-material fit, the fastening element (13, 16) being arranged between the flange side (9) and the transverse side wall (11) in a positionally secure manner.

4. Transverse link according to Claim 1 or 2, **characterized in that**, as viewed in cross section, the hollow profile (8) is of rectangular configuration, the flange side (9) having a flange (26) which is oriented in the direction of one of the longitudinal side walls (12) and is connected to the latter with a material-to-material fit, the flange side (9) and the transverse side wall (11) having in each case an arched portion (27) for accommodating the fastening element (13, 16).

5. Transverse link according to Claim 1 or 2, **characterized in that**, as viewed in cross section, the hollow profile (8) is of square configuration, one of the longitudinal side walls (12) having a collar (23) which protrudes from it and is overlapped by a flange (24), the collar (23) being connected to the flange (24) with a material-to-material fit, and the fastening element (13, 16) bearing against both the longitudinal side walls (12) and the flange side (9) and the transverse side wall (11).

6. Transverse link according to Claim 1 or 2, **characterized in that**, as viewed in cross section, the hollow profile (8) is of S-shaped configuration with its transverse side wall (11) and its longitudinal side walls (12), the flange side (9) having a flange (28) which is connected with a material-to-material fit by way of its end side (29) to an S-bend (31) which is directed towards the flange side (9), a receiving region (33) for accommodating the fastening element (13, 16) being formed with the S-bend (32) which is directed away from the flange side (9).

7. Transverse link according to Claim 1 or 2, **characterized in that**, as viewed in cross section, the hollow profile (8) is of Z-shaped configuration with its transverse side wall (11) and its longitudinal side walls (12), the flange side (9) having a flange (34) which is connected with a material-to-material fit by way of its end side (36) to a rounded Z-tip (37) which is oriented towards the flange side (9), a Z-tip (38) which is directed away from the flange side (9) forming a receiving region (39) for accommodating the fastening element (13, 16).

8. Transverse link according to Claim 1 or 2, **characterized in that**, as viewed in cross section, the hollow profile (8) is of W-shaped configuration with its transverse side wall (11) and its longitudinal side walls (12), the flange side (9) having two flanges (41) which are oriented towards one another and are connected with a material-to-material fit to one another at their abutments (42) and to a W-bend (43) which is oriented in the direction of the flange side (9), the fastening element (13, 16) being accommodated in a receiving region (44).

9. Transverse link according to one of the preceding claims, **characterized in that** the hollow profile (8) or the transverse link (1) is formed from steel or aluminium.

## Revendications

1. Bras latéral monocoque, qui comporte une branche d'attache (2) et une branche de roue (3), dans lequel la branche d'attache (2) comprend, vus dans la direction de marche d'un véhicule automobile, un point d'attache avant (4) et un point d'attache arrière (6) distant de celui-ci, qui peuvent être assemblés à une carrosserie de véhicule automobile ou à un châssis auxiliaire, dans lequel la branche d'attache (2) est orientée essentiellement dans la direction de marche, et dans lequel la branche de roue (3) s'étend du point d'attache avant (4) à une extrémité libre (7), à laquelle une roue peut être attachée, et dans lequel la branche de roue (3) est orientée essentiellement transversalement à la direction de marche, dans lequel au moins la branche d'attache (2), vue en section transversale, a la forme d'un profilé creux fermé (8), **caractérisé en ce que** le profilé creux (8) présente un côté de bride (9), une paroi latérale transversale (11) opposée à celui-ci et deux parois latérales longitudinales (12), dans lequel le profilé creux (8) est fermé sur son côté de bride (9) et dans lequel le côté de bride (9) comprend au moins une bride (19, 24, 26, 28, 34, 41) qui, vue en section transversale par rapport à un axe central (X) du profilé creux (8), s'étend parallèlement à celui-ci, de telle manière qu'un élément de fixation (13, 16) pour l'attache à la carrosserie ou au châssis auxiliaire puisse être intégré en position sûre dans le profilé creux (8), le bras latéral (1) étant fabriqué en une seule pièce à partir d'une seule tôle métallique.

2. Bras latéral selon la revendication 1, **caractérisé en ce que** le profilé creux (8) est fermé en complémentarité de matière sur son côté de bride (9).

3. Bras latéral selon la revendication 1 ou 2, **caractérisé en ce que** le profilé creux (8) est de forme rectangulaire, vu en section transversale, dans lequel le côté de bride (9) comprend deux brides (19) orientées l'une vers l'autre, qui sont assemblées l'une à l'autre par complémentarité de matière à leurs bords jointifs (21), dans lequel l'élément de fixation (13, 16) est disposé en position sûre entre le côté de bride (9) et la paroi latérale transversale (11).

4. Bras latéral selon la revendication 1 ou 2, **caractérisé en ce que** le profilé creux (8) est de forme rectangulaire, vu en section transversale, dans lequel le côté de bride (9) comprend une bride (26) orientée en direction d'une des parois latérales longitudinales (12), qui est assemblée à celle-ci par complémentarité de matière, dans lequel le côté de bride (9) et la paroi latérale transversale (11) présentent respectivement une courbure (27) permettant de loger l'élément de fixation (13, 16).

5. Bras latéral selon la revendication 1 ou 2, **caractérisé en ce que** le profilé creux (8) est de forme carrée, vu en section transversale, dans lequel une des parois latérales longitudinales (12) comporte un rebord (23) saillant sur celle-ci, qui est recouvert par une bride (24), dans lequel le rebord (23) est assemblé à la bride (24) par complémentarité de matière, et dans lequel l'élément de fixation (13, 16) est appliqué aussi bien sur les parois latérales longitudinales (12) que sur le côté de bride (9) et la paroi latérale transversale (11).

6. Bras latéral selon la revendication 1 ou 2, **caractérisé en ce que** le profilé creux (8), vu en section transversale, est en forme de S avec sa paroi latérale transversale (11) et ses parois latérales longitudinales (12), dans lequel le côté de bride (9) comporte une bride (28), qui est assemblée par complémentarité de matière par son côté frontal (29) à un arc du S (31) dirigé vers le côté de bride (9), dans lequel une zone de logement (33) est formée avec l'arc du S (32) dirigé à l'opposé du côté de bride (9) en vue de recevoir l'élément de fixation (13, 16).

7. Bras latéral selon la revendication 1 ou 2, **caractérisé en ce que** le profilé creux (8), vu en section transversale, est en forme de Z avec sa paroi latérale transversale (11) et ses parois latérales longitudinales (12), dans lequel le côté de bride (9) comporte une bride (34), qui est assemblée par complémentarité de matière par son côté frontal (36) à une pointe du Z arrondie (37), orientée vers le côté de bride (9), dans lequel une pointe du Z (38) orientée à l'opposé du côté de bride (9) forme une zone de logement (39) afin de recevoir l'élément de fixation (13, 16).

8. Bras latéral selon la revendication 1 ou 2, **caractérisé en ce que** le profilé creux (8), vu en section transversale, est en forme de W avec sa paroi latérale transversale (11) et ses parois latérales longitudinales (12), dans lequel le côté de bride (9) comporte deux brides (41) orientées l'une vers l'autre, qui sont assemblées par complémentarité de matière l'une à l'autre à leurs bords jointifs (42) et à un arc du W (43) orienté en direction du côté de bride (9), dans lequel l'élément de fixation (13, 16) est placé dans une zone de logement (44).

9. Bras latéral selon l'une quelconque des revendications précédentes, **caractérisé en ce que** le profilé creux (8) ou le bras latéral (1) est constitué d'acier ou d'aluminium.
